Europäisches Patentamt

European Patent Office

Office européen des brevets

(11) Publication number: 0 517 359 A2

# EUROPEAN PATENT APPLICATION

(21) Application number: 92303553.9

(22) Date of filing: 21.04.92

(51) Int. Cl.⁵: G01P 3/50

(30) Priority: 04.06.91 GB 9111931

(43) Date of publication of application:
09.12.92 Bulletin 92/50

(84) Designated Contracting States:
DE ES FR GB IT

(71) Applicant: LUCAS INDUSTRIES PUBLIC
LIMITED COMPANY
Brueton House, New Road
Solihull, West Midlands B91 3TX(GB)

(72) Inventor: Sakai, Izumi
16, Baxters Road, Shirley
Solihull, West Midlands, B90 2RU(GB)

(74) Representative: Robinson, John Stuart et al
Marks & Clerk Alpha Tower Suffolk Street
Oueensway
Birmingham, B1 1TT(GB)

(54) Method of and apparatus for checking speed measurement.

(57) A reference value (T) is established based on a preceding acceptable speed measurement. Signal means (47-49) signal an acceptable speed measurement when a subsequent speed measurement differs from the reference value by less than a predetermined amount.

FIG.5.

The present invention relates to a method of and an apparatus for checking speed measurement. Such a method and apparatus may be applied to a speed over ground sensor, for instance of the type using an optical spatial filter.

Speed measurements are performed in many ways by different types of speed sensors, but many such sensors produce an output signal having a fundamental frequency which is a function of speed. For instance, speed over ground sensors using optical spatial filtering techniques generally produce output signals of an approximately sinusoidal type where the fundamental frequency is directly proportional to the relative speed between the sensor and a light-reflecting, light transmitting, or light-emitting object.

Speed over ground sensors of the optical spatial filtering type may be used in many applications, one of which is in measuring the speed of a vehicle with respect to the ground. However, speed measurements are susceptible to variations, for instance caused by movement of a vehicle on its suspension with respect to the ground, vehicle vibration, and debris such as leaves or snow blown between the sensor and the ground by wind. Variations in the frequency or phase of the sensor signal may also be caused by the structure and operation of the sensor, for instance because of the finite length of the spatial filter.

In order to interface the sensor to subsequent data processing electronics, it is common to supply the output of the sensor to a comparator which makes a comparison with one or more reference levels and provides an output pulse signal in which the repetition rate of the pulses corresponds to the fundamental frequency component of the sensor output signal. For relatively good signal/noise ratios of the sensor output signal variations in timing or "jitter" of the pulses are relatively small. However, for poor signal/noise ratios, the relatively high levels of noise can result in spurious pulses being produced or cycles of the sensor output signal being missed. These effects can therefore contribute to inaccuracies and spurious variations in speed measurement.

JP 60-158354 discloses an arrangement intended to discriminate valid pulses from missing pulses for speed sensors. The discrimination is based on the amplitude of the sensor output signal such that relatively low sensor output signal amplitudes are taken to indicate poor signal/noise ratios and thus poor reliability in the repetition rate of the pulses. However, in order to measure the amplitude of the sensor output signals, low pass filtering must be used. This gives rise to a relatively slow response time so that missing or spurious pulses can still be accepted as apparently valid pulses.

According to a first aspect of the invention, there is provided an apparatus for checking speed measurement, comprising means for establishing a reference value based on a preceding acceptable speed measurement, and means for signalling an acceptable speed measurement when a subsequent speed measurement differs from the reference value by less than a predetermined amount.

The signalling means may be arranged to signal an error when the subsequent speed measurement differs from the reference value by more than the predetermined amount. Means may be provided for accumulating the number of acceptable speed measurements and/or the number of errors. Further means may be provided for calculating a measure of reliability, for instance as the quotient of the number of acceptable speed measurements divided by the number of errors or as the number of acceptable speed measurements divided by the sum of the number of acceptable speed measurements and the number of errors.

The predetermined amount may be a function of the reference value. For instance, the predetermined amount may comprise upper and lower limits which are predetermined proportions of the reference value. The predetermined portions may be fixed or may vary with speed, and may be equal to or different from each other. The reference value may comprise a preceding acceptable speed measurement or an average of a plurality of preceding acceptable speed measurements.

For a speed sensor of the type which produces a series of pulses at a repetition rate which is a function of speed, the establishing means may be arranged to establish the reference value as a first time interval between a first preceding pulse and a second preceding pulse, and the signalling means may be arranged to measure a second time interval from a third preceding pulse and to signal an acceptable speed measurement if an expected pulse occurs within a predetermined time window after the third preceding pulse, where the predetermined time window is equal to the first time interval plus a third time interval and minus a fourth time interval. The first and second preceding pulses may be consecutive and the expected pulse may be immediately subsequent to the third preceding pulse. The third preceding pulse may be immediately subsequent to the second preceding pulse. The signalling means may signal an error if the expected pulse is outside the predetermined time window. The third and fourth time intervals may be equal to or different from each other, and may be proportional to the first time interval.

According to a second aspect of the invention, there is provided a method of checking speed measurement, comprising establishing a reference value based on a preceding acceptable speed measurement, and signalling an acceptable speed measurement when a subsequent speed measurement differs from the reference value by less than a predetermined amount.

It is thus possible to provide an arrangement which can remove the effects of missing or spurious pulses from a speed measurement based on a speed over ground sensor or the like. By defining an acceptance time window based on a previously acceptable inter-pulse time period, a current measurement may be ignored and an error signalled if the expected pulse occurs outside the time window i.e. before or after the time window. The width of the time window may readily be set so as to accommodate acceptable timing jitter and physically plausible accelerations and decelerations of a vehicle while rejecting pulses which are clearly spurious or missing. This checking is performed with minimal time delay so that reliability of speed measurement is improved.

The invention will be further described, by way of example, with reference to the accompanying drawings, in which:

Figure 1 is a schematic diagram of a known type of optical speed over ground sensor;

Figure 2 is a graph against time illustrating typical output pulses of the sensor of Figure 1;

Figure 3 is a block schematic diagram of an apparatus constituting a first embodiment of the invention;

Figure 4 is a flow diagram illustrating operation of the apparatus of Figure 3; and

Figure 5 is a block schematic diagram of an apparatus constituting a second embodiment of the invention.

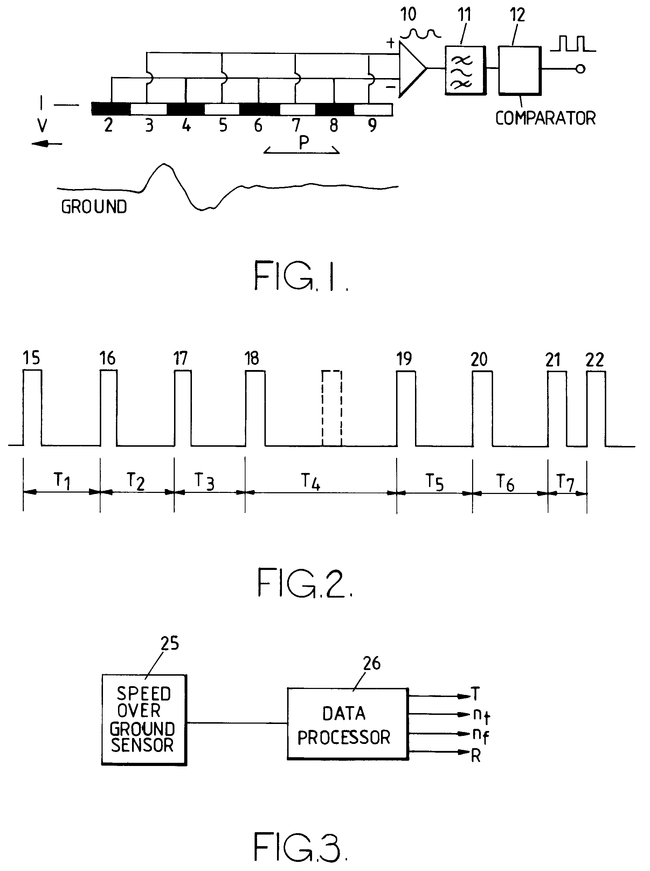

The optical speed over ground sensor shown in Figure 1 is of the optical spatial filtering type and is suitable for mounting on a vehicle for measuring speed with respect to the ground. The sensor comprises an optical filter in the form of an array 1 of opto-electric sensors 2 to 9. The opto-electric sensors 2, 4, 6, and 8 have their outputs summed and connected to the inverting input of a differential amplifier 10, whereas the outputs of the sensors 3, 5, 7, and 9 are summed and connected to the non-inverting input of the differential amplifier 10. The output of the amplifier 10 is connected to the input of a band-pass filter 11, whose output is connected to the input of a comparator 12.

The effective pitch of the spatial filter provided by the array 1 is shown at P in Figure 1. As is well known for speed over ground sensors of this type, the differential amplifier 10 produces an output signal which is approximately sinusoidal and whose frequency is proportional to speed V and inversely proportional to the pitch P. The filter 11 removes out-of-band frequency components and the filtered signal is compared in the comparator 12 with a reference level (generally with hysteresis) in order to provide an output signal in the form of a series of pulses whose repetition rate is equal to the fundamental frequency of the output signal of the differential amplifier 10.

As is shown in Figure 2, the output pulses 15 to 22 from the comparator 12 have inter-pulse periods (measured from the leading edges of the pulses) of T1 to T7. Because of the effects mentioned hereinbefore such as vehicle vibration, sensor characteristics, and the like, the periods T1, T2, T3, T5, and T6 between genuine pulses vary somewhat but are not greatly different from one inter-pulse period to the next. However, as indicated by broken lines between the pulses 18 and 19, a pulse has been missed, for instance because of a poor signal/noise ratio, so that the inter-pulse period T4 is much greater than the periods between genuine consecutive pulses. Further, the pulse 22 is a spurious pulse which has occurred earlier than expected, so that the inter-pulse period T7 is much less than the period between genuine pulses.

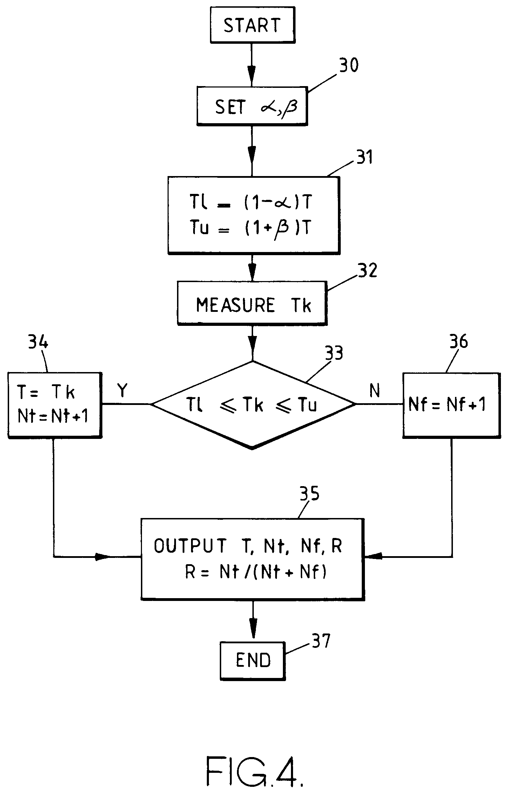

Figure 3 shows a speed over ground sensor 25 of the type shown in Figure 1 connected to an input of a data processor 26 forming an apparatus for checking speed measurements made by the sensor 25. The data processor 26 may comprise a micro-processor or micro-computer programmed to perform the processing steps illustrated in Figure 4 and having outputs for providing information which will be described with reference to Figure 4.

The processing steps shown in Figure 4 constitute an interrupt routine which is requested each time the input of the data processor 26 receives the leading edge of a pulse from the sensor 25. In a first step 30, the parameters $\alpha$ and $\beta$ are set for defining an acceptance time window. The parameters $\alpha$ and $\beta$ may be fixed or may vary, for instance with speed. These parameters may be equal to or different from each other. In a typical application as illustrated in the drawings, the parameters $\alpha$ and $\beta$ may represent percentages such as plus and minus 20%.

A step 31 defines the lower limit Tl and the upper limit Tu of an acceptance time window in terms of an inter-pulse period T which has been accepted during a previous speed measurement check. Thus, where $\alpha$ and $\beta$ represent 20%, the acceptance time window occurs between 80% and 120% of the previous accepted inter-pulse period T.

At 32, the data processor times the inter-pulse period i.e. the time from the leading edge of the pulse which has just been received to the time when the leading edge of the next pulse is received. The measured period Tk is compared with the upper and lower time window limits at 33. If the measured period Tk falls outside the time window, step 36 increments the number $n_f$ of erroneous measurements. If the period Tk falls within the time window, the previously accepted inter-pulse period T is replaced by the measured period Tk and the number $n_t$ of acceptable speed measurements is incremented. Finally, a step 35 calculates a reliability factor R as $n_t/(n_t + n_f)$. The time interval T, the numbers of accepted and erroneous pulses $n_t$ and $n_f$, and the reliability factor R are output at 35. If the step 34 has been performed, then the period Tk is the new accepted measured period whereas, if the step 36 has been performed, the previously accepted period T is output. The interrupt routine ends at 37.

The periods T may be supplied to an apparatus for calculating the vehicle speed as a linear function of the reciprocal of this period measurement. The period and/or the speed may be supplied to other systems of a vehicle, such as an anti-lock brake system, a traction control system, or a suspension control system. The reliability factor R may also be supplied to such systems so as to ensure fail safe operation in the event that the reliability factor is low.

The operation illustrated in Figure 4 may be modified in various ways. For instance, instead of relying on a single previously accepted period T in order to define the acceptance window in the step 31, a weighted average of a plurality of previous accepted periods may be used. Also, the accumulators for $n_t$ and $n_f$ may be periodically reset. Further, the reliability factor R may be defined as $n_t/n_f$.

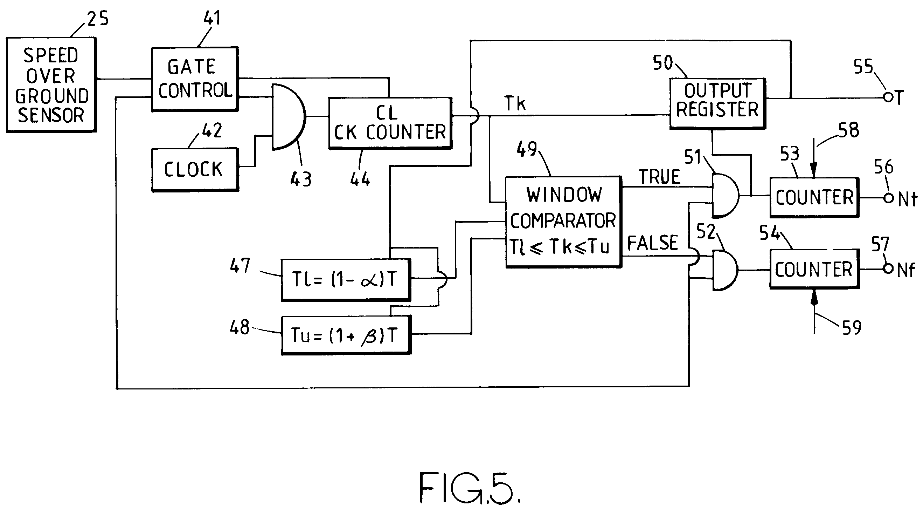

The embodiment shown in Figure 5 differs from that illustrated in Figures 3 and 4 in that it comprises a hard-wired arrangement, for instance comprising discrete digital integrated circuits. The speed over ground sensor 25 is again of the type shown in Figure 1 and is connected to a gate control circuit 41. The gate control circuit 41 responds to the leading and trailing edges of the pulses from the sensor 25 to provide appropriately timed pulses at its three outputs so as to control the timing of operation of the apparatus of Figure 5.

A first output of the circuit 41 is connected to a first input of an AND gate 43, whose second input receives clock pulses from a clock 42. The output of the gate 43 is connected to the clock input of a counter 44 whose reset or clear input is connected to a second output of the gate control circuit 41. The parallel output of the counter 44 is connected to the data input of an output register 50, for instance comprising a plurality of latches, and to the data input of a window comparator 49. The output of the register 50 supplies the measured inter-pulse period T at an output 55 and is connected to multipliers 47 and 48 which form the acceptance time window limit values and supply them to the limit value inputs of the comparator 49.

The true and false outputs of the comparator 49 are supplied to first inputs of AND gates 51 and 52, respectively. The second inputs of the gates 51 and 52 are connected to a third output of the gate control circuit 41. The output of the gate 51 is connected to a write input of the register 50 and to a clock input of a counter 53, whose output is connected to a terminal 56 for supplying the number $n_t$ of accepted periods. The output of the gate 52 is connected to the clock input of a counter 54 whose output is connected to a terminal 57 for supplying the number $n_f$ of detected errors. The counters 53 and 54 are provided with reset inputs 58 and 59, which are used for periodically resetting the counters 53 and 54 to zero.

The gate control circuit 41 clears the counter 44 upon receipt of the leading edge of a pulse from the sensor 25 and immediately opens the gate 43 so that the counter 44 begins counting clock pulses from the clock 42 so as to time the inter-pulse period. The window comparator 49 compares the current count in the counter 44 with the upper and lower limits calculated by the multipliers 47 and 48 on the basis of the previously accepted period T held in the output register 50. When the next pulse leading edge is received, the gate control circuit 41 opens the gates 51 and 52. If the count in the counter 44 falls within the acceptance time window, the output of the gate 51 rises briefly so as to latch the new count in the output register 50 and increment the counter 53. Alternatively, if the count is outside the time window, the output register 50 is not enabled and therefore holds the previously accepted period. However, the output of the gate 52 increments the counter 54.

This process is then repeated so as to measure each inter-pulse period and compare it with the acceptance time window.

**Claims**

1. An apparatus for checking speed measurement, characterised by means (41-44, 50) for establishing a reference value (T) based on a preceding acceptable speed measurement, and means (47-49) for signalling an acceptable speed measurement when a subsequent speed measurement (Tk) differs from the reference value by less than a predetermined amount.

2. An apparatus as claimed in Claim 1, characterised in that the signalling means (49) is arranged to signal when the subsequent speed measurement (Tk) differs from the reference value (T) by more than a predetermined amount.

3. An apparatus as claimed in Claim 1 or 2, characterised by a first accumulating means (53) for accumulating the number of acceptable speed measurements.

4. An apparatus as claimed in any one of the preceding claims, characterised by a second accumulating means (54) for accumulating the number of unacceptable speed measurements.

5. An apparatus as claimed in Claim 4 when dependent on Claim 3, characterised by means for calculating a measure of reliability.

6. An apparatus as claimed in Claim 5, characterised in that the means for calculating the measure of reliability is arranged to divide the number of acceptable speed measurements by the sum of the number of acceptable speed measurements and the number of unacceptable speed measurements.

7. An apparatus as claimed in any one of the preceding claims, characterised in that the predetermined amount is a function of the reference value.

8. An apparatus as claimed in Claim 7, characterised in that the predetermined amount has an upper limit (Tu) which is a first predetermined portion $(1 + \beta)$ of the reference value (T).

9. An apparatus as claimed in Claim 7 or 8, characterised in that the predetermined amount has a lower limit (T1) which is a second predetermined portion $(1-\alpha)$ of the reference value (T).

10. An apparatus as claimed in any one of the preceding claims, characterised in that the reference value (T) is a preceding acceptable speed measurement.

11. An apparatus as claimed in any one of Claims 1 to 9, characterised in that the reference value is an average of at least two preceding acceptable speed measurements.

12. An apparatus as claimed in any one of the preceding claims, for use with a speed sensor (25) which produces pulses at a repetition rate which is a function of speed, characterised in that the means for establishing the reference value (41-44, 50) is arranged to establish the reference value as a first time interval between a first preceding pulse and a second preceding pulse, and the signalling means (49, 41-44) is arranged to measure a second time interval from a third preceding pulse and to signal an acceptable speed measurement if an expected pulse occurs within a predetermined time window after the third preceding pulse, where the predetermined time window extends from the first time interval minus a third time interval to the first time interval plus a fourth time interval.

13. An apparatus as claimed in Claim 12, characterised in that the first and second preceding pulses are consecutive and the expected pulse is immediately subsequent to the third preceding pulse.

14. An apparatus as claimed in Claim 13, characterised in that the third preceding pulse is immediately subsequent to the second preceding pulse.

15. An apparatus as claimed in Claim 13, characterised in that the second preceding pulse and the third preceding pulse are the same pulse.

16. A method of checking speed measurement, comprising establishing a reference value (T) based on a preceding acceptable speed measurement, and signalling an acceptable speed measurement when a subsequent speed measurement differs from the reference value (T) by less than a predetermined amount.

17. A method as claimed in Claim 16, characterised in that the number of acceptable speed measurements (nt) and the number of unacceptable speed measurements (nf) are analysed to calculate a measure of reliability.

18. A method as claimed in Claim 16 or 17, characterised in that the predetermined amount is a function of the reference value.

19. A method as claimed in any one of Claims 16 to 18, characterised in that the predetermined amount has an upper limit (Tu) which is a first predetermined portion $(1 + \beta)$ of the reference value (T).

20. A method as claimed in any one of Claims 16 to 19, characterised in that the predetermined amount has a lower limit (T1) which is a second predetermined portion $(1-\alpha)$ of the reference value (T).

21. A method as claimed in any one of Claims 16 to 20, characterised in that the reference value is an average of at least two preceding acceptable speed measurements.

FIG.1.

FIG.2.

FIG.3.

START

SET $\alpha, \beta$ ——30

$Tl = (1-\alpha)T$
$Tu = (1+\beta)T$ ——31

MEASURE Tk ——32

34——
$T = Tk$
$Nt = Nt+1$

Y —— 33 $Tl \leqslant Tk \leqslant Tu$ —— N —— 36 $Nf = Nf+1$

35——
OUTPUT T, Nt, Nf, R
$R = Nt/(Nt+Nf)$

END ——37

FIG.4.

FIG.5.

EP 0 517 359 A2